# EUROPÄISCHE PATENTSCHRIFT

(11) **EP 2 800 168 B1**
(45) Veröffentlichungstag und Bekanntmachung des Hinweises auf die Patenterteilung: **21.10.2015**
(21) Anmeldenummer: 13165818.9
(22) Anmeldetag: 29.04.2013
(51) Int. Cl.: H01M 2/20, H01M 10/42, H01M 10/48

(54) **Batteriesystem und Verfahren zur Herstellung einer elektrisch leitenden Verbindung zwischen einem Zellverbinder und einer Elektronikeinheit eines Batteriesystems**
Battery system and method for producing an electroconductive connection between a cell connector and an electronics unit of a battery system
Système de batterie et procédé de fabrication d'une liaison conductrice d'électricité entre un connecteur de cellules et une unité électronique d'un système de batterie

(43) Veröffentlichungstag der Anmeldung: 05.11.2014
(73) Patentinhaber: Samsung SDI Co., Ltd., Yongin-si, Gyeonggi-do (KR)
(72) Erfinder: Kropsch, Thomas, 8700 Leoben (AT)
(74) Vertreter: Gulde & Partner

(56) Entgegenhaltungen:
- WO-A1-2012/131809
- DE-U1-202009 006 254
- GB-A- 2 330 253
- US-A1- 2012 038 365

## Beschreibung

Die vorliegende Erfindung betrifft ein Batteriesystem, umfassend eine Vielzahl von Zellen die in zumindest einem Stapel angeordnet sind, wobei ein Pol einer ersten Zelle mit einem Pol einer zweiten Zelle durch einen Zellverbinder elektrisch leitend verbunden ist, eine Elektronikeinheit die dazu eingerichtet ist die Spannung der Zellen zu erfassen, wobei an dem Zellverbinder ein erster Stift angeordnet ist und an der Elektronikeinheit zumindest ein zweiter Stift angeordnet ist, und einen Leiter, wobei durch den Leiter eine elektrisch leitende Verbindung zwischen dem ersten Stift und dem zweiten Stift gebildet wird, und wobei der Leiter zumindest einen flexiblen Abschnitt aufweist. Die Erfindung betrifft außerdem ein Verfahren zur Herstellung einer elektrisch leitenden Verbindung zwischen einem ersten Stift, der an einem Zellverbinder angeordnet ist, welcher mit Polen von zumindest zwei Zellen eines Batteriesystems verbunden ist, und einem zweiten Stift, der an einer Elektronikeinheit angeordnet ist.

Derartige Batteriesysteme werden vor Allem als Energiespeicher in Kraftfahrzeugen eingesetzt, beispielsweise für den Antrieb von Elektro- und Hybridfahrzeugen.

Ein Batteriesystem der gattungsgemäßen Art ist aus der DE 11 2011 101 397 T5 bekannt. Dabei wird eine Verbindungsstruktur für ein Verdrahtungselement beschrieben, bei der ein Lötabschnitt an einem Endabschnitt einer Sammelschiene ausgebildet ist. In dem Lötabschnitt ist ein vorstehendes Teil ausgebildet, das stiftartig aufgerichtet ist. Das vorstehende Teil wird durch einen Lochabschnitt des Verdrahtungselementes hindurchgeführt. Das Verdrahtungselement wird durch eine flexible Leiterplatte gebildet. Das durch den Lochabschnitt hindurchgeführte vorstehende Teil und ein Schaltungsmuster des Verdrahtungselementes sind miteinander verlötet.

Bei den genannten Anwendungen ist es erwünscht einen hohen Automatisierungsgrad bei der Montage des Batteriesystems zu erreichen, sowie eine über die gesamte Lebensdauer des Batteriesystems zuverlässige elektrische Verbindung zwischen Zellverbinder und Elektronikeinheit durch den Leiter. Durch diese elektrische Verbindung wird die Spannung der Zellen der Elektronikeinheit zur Auswertung zugeführt. Zudem ist die Elektronikeinheit häufig dazu eingerichtet, den Ladungszustand der Zellen mittels Entladung über einen zu jeder Zelle parallel schaltbaren Widerstand gezielt zu verringern, wobei der Stromkreis für diese Entladung über den Leiter führt. Eine Vergrößerung des Übergangswiderstands zwischen der elektrischen Verbindung zwischen Zellverbinder und Elektronikeinheit würde direkt als Messfehler in die Auswertung eingehen, da am erhöhten Übergangswiderstand eine erhöhte Spannung abfallen würde. Dies ist besonders bei Verwendung von Lithium-Ionen-Zellen unerwünscht, da sich bei diesem Typ von Zellen die Zellspannung in einem wesentlichen Bereich des Ladungsinhalts nur geringfügig ändert. Durch die beim Betrieb des Kraftfahrzeugs auftretenden Erschütterungen und Vibrationen kann sich der Übergangswiderstand einer Lötverbindung erhöhen, oder die Lötverbindung kann sich lösen. Dies ist unerwünscht.

Es ist eine Aufgabe der Erfindung, Batteriesysteme der genannten Art so zu verbessern, dass eine automatisierte Verlegung und Herstellung einer elektrisch leitenden Verbindung zwischen einem Zellverbinder und einer Elektronikeinheit mit einer hohen Prozesssicherheit und einer guter Widerstandsfähigkeit gegen Vibrationen und Erschütterungen ermöglicht wird.

Eine weitere Aufgabe der Erfindung ist es ein Verfahren bereitzustellen, mit dem eine elektrisch leitende Verbindung zwischen einem Zellverbinder und einer Elektronikeinheit eines Batteriesystems automatisierbar und mit einer guten Widerstandsfähigkeit gegen Vibrationen und Erschütterungen erreicht wird.

Die Lösung der Aufgabe erfolgt durch ein Batteriesystem, umfassend eine Vielzahl von Zellen die in zumindest einem Stapel angeordnet sind, wobei ein Pol einer ersten Zelle mit einem Pol einer zweiten Zelle durch einen Zellverbinder elektrisch leitend verbunden ist, eine Elektronikeinheit die dazu eingerichtet ist die Spannung der Zellen zu erfassen, wobei an dem Zellverbinder ein erster Stift angeordnet ist und an der Elektronikeinheit zumindest ein zweiter Stift angeordnet ist, und einen Leiter, wobei durch den Leiter eine elektrisch leitende Verbindung zwischen dem ersten Stift und dem zweiten Stift gebildet wird, und wobei der Leiter zumindest einen flexiblen Abschnitt aufweist, wobei der Leiter ein erstes Kontaktelement aufweist, das mit einem ersten Ende des flexiblen Abschnitts elektrisch leitend verbunden ist, wobei das erste Kontaktelement mit dem ersten Stift elektrisch leitend verbunden ist, und dass der Leiter ein zweites Kontaktelement aufweist, das mit einem zweiten Ende des flexiblen Abschnitts elektrisch leitend verbunden ist, wobei das zweite Kontaktelement mit dem zweiten Stift elektrisch leitend verbunden ist.

Erfindungsgemäß ist der erste Stift mit dem Zellverbinder fest verbunden. Bevorzugt ist der erste Stift in den Zellverbinder eingepresst oder aufgeschweißt. Dadurch wird eine dauerhaft feste form- oder stoffschlüssige Verbindung erreicht. Der zweite Stift ist mit der Elektronikeinheit fest verbunden, beispielsweise durch Einpressen oder durch eine Lötverbindung. Für Elektronikeinheiten sind im Stand der Technik zahlreiche Verfahren zum Herstellen einer Lötverbindung bekannt, die auch für die in einem Kraftfahrzeug auftretenden Belastungen geeignet sind. Beispielsweise kann der zweite Stift im Wiederaufschmelzlötverfahren auf der Elektronikeinheit befestigt sein. Derartige Lötverfahren sind jedoch für den Einsatz im Batteriesystem ungeeignet, da die Zellen bei der hohen Temperatur im Lötofen erheblich geschädigt werden würden.

Durch den flexiblen Abschnitt des Leiters mit einem Kontaktelement an jedem Ende wird eine Biegebelastung auf den ersten und zweiten Stift vermieden, wodurch die Widerstandsfähigkeit der Verbindung gegen eine Vibrationsbelastung weiter verbessert wird.

Weiterbildungen der Erfindung sind in den abhängigen Ansprüchen, der Beschreibung sowie den beigefügten Zeichnungen angegeben.

Vorzugsweise umfasst das erste Kontaktelement eine erste Hülse, die dazu eingerichtet ist zumindest einen Abschnitt des ersten Stifts zu umgreifen. Das zweite Kontaktelement weist eine zweite Hülse auf, die dazu eingerichtet ist zumindest einen Abschnitt des zweiten Stifts zu umgreifen. Die erste Hülse ist mit dem ersten Stift verschweißt, die zweite Hülse ist mit dem zweiten Stift verschweißt. Die dadurch gebildete Verbindung zwischen erstem/zweitem Kontaktelement und erster/zweiter Hülse ist einfach und automatisiert herstellbar, und zeichnet sich durch eine gute Haltbarkeit aus. Alternativ zur Schweißverbindung kann jede Verbindungstechnik gewählt werden, durch die eine dauerhaft elektrisch leitende Verbindung automatisiert herstellbar ist. Beispielsweise kann die Verbindung zwischen erstem/zweitem Stift und erster/zweiter Hülse durch eine mechanische Verbindung, besonders bevorzugt als Crimp-Verbindung ausgebildet sein. In diesem Fall bildet die erste/zweite Hülse eine entsprechende Crimp-Geometrie aus. Alternativ, oder auch ergänzend dazu kann der erste/zweite Stift mit der ersten/zweiten Hülse mittels einem elektrisch gut leitfähigen Klebstoff verklebt sein.

Gemäß einer weiteren Ausgestaltung der Erfindung ist das erste Kontaktelement mit dem ersten Ende des flexiblen Abschnitts durch eine Crimp-Verbindung verbunden. Das zweite Kontaktelement ist mit dem zweiten Ende des flexiblen Abschnitts ebenfalls durch eine Crimp-Verbindung verbunden. Crimp-Verbindungen zeichnen sich ebenfalls durch eine sichere und einfach automatisierbare Herstellung aus. Das erste sowie das zweite Kontaktelement ist dabei bevorzugt einstückig ausgebildet, beispielsweise als Stanz-Biege-Teil.

Gemäß einer Ausführungsform der Erfindung weist die erste und/oder zweite Hülse zumindest abschnittsweise eine konische Form auf. Durch die zumindest abschnittsweise konische Formgebung der Hülse wird das Fügen von Hülse und erstem/zweitem Stift vereinfacht. Dies vereinfacht die Automatisierung der Verbindungsherstellung.

Die Lösung der Aufgabe erfolgt außerdem durch ein Verfahren zur Herstellung einer elektrisch leitenden Verbindung zwischen einem ersten Stift, der an einem Zellverbinder angeordnet ist, welcher mit Polen von zumindest zwei Zellen eines Batteriesystems verbunden ist, und einem zweiten Stift, der an einer Elektronikeinheit angeordnet ist, durch einen Leiter, der einen flexiblen Abschnitt sowie ein erstes und ein zweites Kontaktelement umfasst, umfassend die Schritte: Aufschieben einer ersten Hülse des ersten Kontaktelements auf den ersten Stift, Verschweißen der ersten Hülse mit dem ersten Stift, Aufschieben einer zweiten Hülse des zweiten Kontaktelements auf den zweiten Stift, und Verschweißen der zweiten Hülse mit dem zweiten Stift.

Die Erfindung wird im Folgenden beispielhaft unter Bezugnahme auf die Zeichnungen beschrieben.
- Fig. 1: zeigt eine schematische Ansicht des Batteriesystems.
- Fig. 2: zeigt eine Detaildarstellung des Batteriesystems.
- Fig. 3: zeigt eine erste Ausführungsform eines Leiters.
- Fig. 4: zeigt eine zweite Ausführungsform des Leiters.

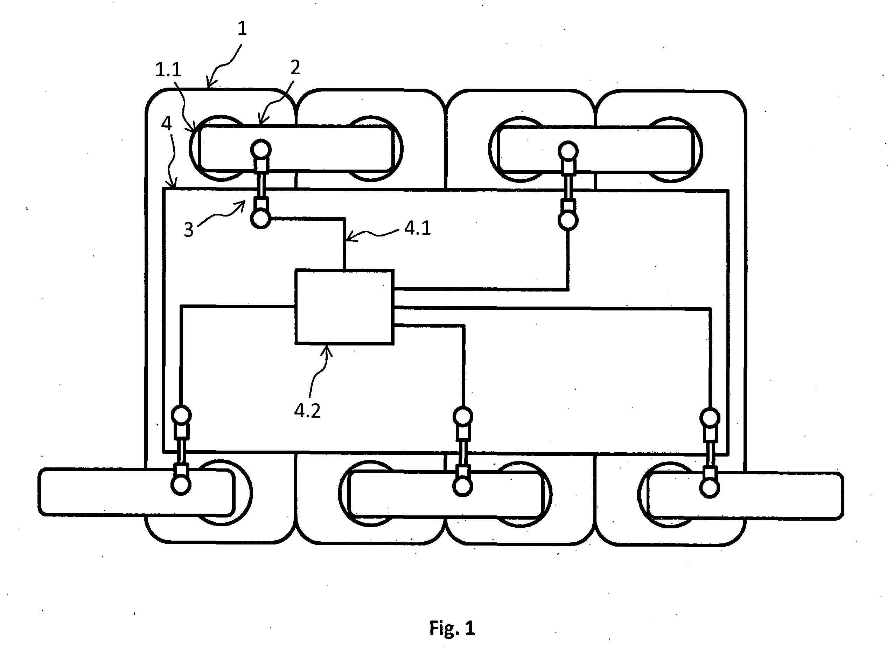

In Fig. 1 ist eine schematische Ansicht des Batteriesystems dargestellt. Eine Vielzahl von Zellen 1 sind aneinandergereiht, und durch Zellverbinder 2 elektrisch leitend miteinander verbunden. Dazu ist ein Zellverbinder 2 mit einem Pol 1.1P einer ersten Zelle 1.1 und mit einem Pol 1.2P einer zweiten Zelle 1.2 elektrisch leitend verbunden, beispielsweise mittels einer Schraub- oder Schweißverbindung. Jeder Zellverbinder 2 ist über einen Leiter 3 mit einer Übertragungsleitung 4.1 einer Elektronikeinheit 4 elektrisch leitend verbunden. Die Übertragungsleitung 4.1 kann beispielsweise als Leiterbahn auf einer Steuerplatine ausgebildet sein. Das derart an den Zellverbindern 2 abgegriffene Spannungspotential wird über die Übertragungsleitung 4.1 an eine Signalverarbeitungseinheit 4.2 der Elektronikeinheit 4 übertragen. Die Signalverarbeitungseinheit 4.2 ist dazu eingerichtet die an verschiedenen Zellverbindern 2 abgegriffenen Spannungspotentiale zu erfassen und auszuwerten.

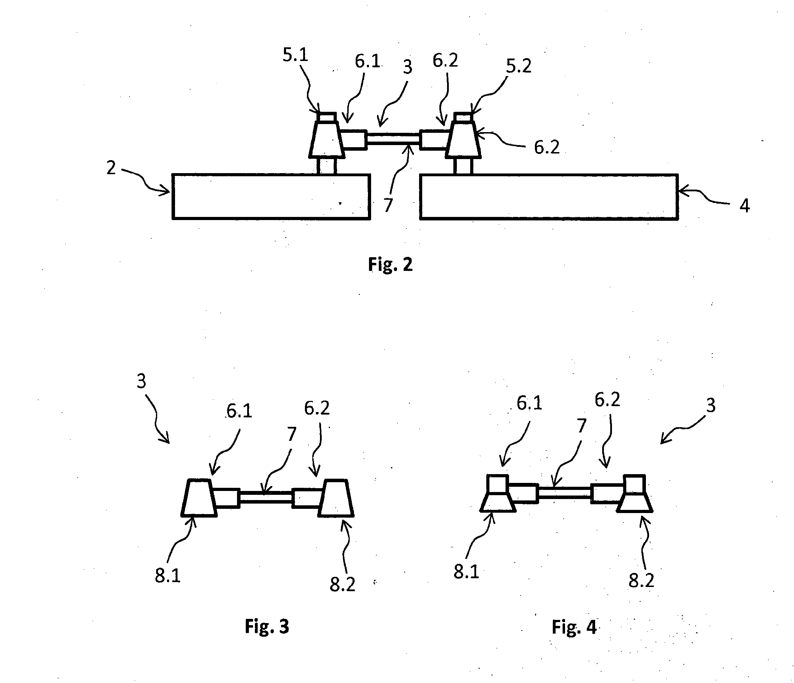

Fig. 2 zeigt eine Detaildarstellung des Batteriesystems, wobei die Zellen 1 aus Gründen der Übersichtlichkeit nicht dargestellt sind. Am Zellverbinder 2 ist ein erster Stift 5.1 angeordnet, der mit dem Zellverbinder 2 elektrisch leitend verbunden ist. Der erste Stift 5.1 ist bevorzugt in den Zellverbinder eingepresst. Alternativ dazu kann der erste Stift 5.1 einteilig mit dem Zellverbinder 2 ausgebildet sein, beispielsweise als nach oben gebogener Fortsatz des Zellverbinders 2, oder der erste Stift 5.1 kann mit dem Zellverbinder 2 verschweißt sein. An der Elektronikeinheit 4 ist ein zweiter Stift 5.2 angeordnet, der mit der Übertragungsleitung 4.1 elektrisch leitend verbunden ist. Der zweite Stift 5.2 ist bevorzugt auf eine Kontaktfläche der Elektronikeinheit 4 aufgelötet, oder in ein Aufnahmeloch in der Elektronikeinheit 4 eingepresst. Der Leiter 3 umfasst ein erstes Kontaktelement 6.1, ein zweites Kontaktelement 6.2 und einen flexiblen Abschnitt 7. Das erste Kontaktelement 6.1 ist mit dem ersten Stift 5.1, das zweite Kontaktelement 6.2 mit dem zweiten Stift 5.2 elektrisch leitend verbunden. Die Verbindung erfolgt bevorzugt mittels Schweißen. Der flexible Abschnitt 7 ist mit erstem und zweitem Kontaktelement 6.1, 6.2 elektrisch leitend verbunden, bevorzugt mittels einer Crimp-Verbindung. Dazu ist an erstem und zweitem Kontaktelement 6,1, 6.2 ein Crimp-Abschnitt ausgebildet.

Fig. 3 zeigt eine erste Ausführungsform des Leiters 3. Das erste Kontaktelement 6.1 weist eine erste Hülse 8.1 auf. Die erste Hülse 8.1 hat über ihre gesamte Höhe eine konische Form, womit das Aufbringen auf den ersten Stift 5.1 erleichtert wird. Das zweite Kontaktelement weist eine zweite Hülse 8.2 auf, die ebenfalls eine konische Form aufweist. Fig. 4 zeigt eine zweite Ausführungsform des Leiters 3. In dieser Ausführungsform ist die erste/zweite Hülse 8.1/8.2 nur abschnittsweise konisch. Durch den konischen Abschnitt der ersten/zweiten Hülse wird das Aufbringen auf den ersten/zweiten Stift 5.1/5.2 erleichtert, während durch den Abschnitt mit konstantem Querschnitt ein guter Halt auf dem ersten/zweiten Stift 5.1/5.2 erzielt wird. Dies verbessert die Qualität der Schweißverbindung.

### Bezugszeichenliste

- 1: Zelle
- 1.1: Erste Zelle
- 1.2: Zweite Zelle
- 1.1P: Pol der ersten Zelle
- 1.2P: Pol der zweiten Zelle
- 2: Zellverbinder
- 3: Leiter
- 4: Elektronikeinheit
- 4.1: Übertragungsleitung
- 4.2: Signalverarbeitungseinheit
- 5.1: Erster Stift
- 5.2: Zweiter Stift
- 6.1: Erstes Kontaktelement
- 6.2: Zweites Kontaktelement
- 7: Flexibler Abschnitt
- 8.1: Erste Hülse
- 8.2: Zweite Hülse

## Patentansprüche

1. Batteriesystem, umfassend eine Vielzahl von Zellen (1) die in zumindest einem Stapel angeordnet sind, wobei ein Pol (1.1P) einer ersten Zelle (1.1) mit einem Pol (1.2P) einer zweiten Zelle (1.2) durch einen Zellverbinder (2) elektrisch leitend verbunden ist, eine Elektronikeinheit (4) die dazu eingerichtet ist die Spannung der Zellen (1) zu erfassen, wobei an dem Zellverbinder (2) ein erster Stift (5.1) angeordnet ist und an der Elektronikeinheit (4) zumindest ein zweiter Stift (5.2) angeordnet ist, und einen Leiter (3), wobei durch den Leiter (3) eine elektrisch leitende Verbindung zwischen dem ersten Stift (5.1) und dem zweiten Stift (5.2) gebildet wird, und wobei der Leiter (3) zumindest einen flexiblen Abschnitt (7) aufweist,
**dadurch gekennzeichnet, dass** der Leiter (3) ein erstes Kontaktelement (6.1) aufweist, das mit einem ersten Ende des flexiblen Abschnitts (7) elektrisch leitend verbunden ist, wobei das erste Kontaktelement (6.1) mit dem ersten Stift (5.1) elektrisch leitend verbunden ist, und dass der Leiter (7) ein zweites Kontaktelement (6.2) aufweist, das mit einem zweiten Ende des flexiblen Abschnitts (7) elektrisch leitend verbunden ist, wobei das zweite Kontaktelement (6.2) mit dem zweiten Stift (5.2) elektrisch leitend verbunden ist.

2. Batteriesystem nach Anspruch 1,
**dadurch gekennzeichnet, dass** das erste Kontaktelement (6.1) eine erste Hülse (8.1) aufweist, die dazu eingerichtet ist zumindest einen Abschnitt des ersten Stifts (5.1) zu umgreifen.

3. Batteriesystem nach Anspruch 2,
**dadurch gekennzeichnet, dass** die erste Hülse (8.1) mit dem ersten Stift (5.1) verschweißt ist.

4. Batteriesystem nach zumindest einem der Ansprüche 1 bis 3,
**dadurch gekennzeichnet, dass** das erste Kontaktelement (6.1) mit dem ersten Ende des flexiblen Abschnitts (7) durch eine Crimp-Verbindung verbunden ist.

5. Batteriesystem nach zumindest einem der vorgehenden Ansprüche,
**dadurch gekennzeichnet, dass** das zweite Kontaktelement (6.2) eine zweite Hülse (8.2) aufweist, die dazu eingerichtet ist zumindest einen Abschnitt des zweiten Stifts (5.2) zu umgreifen.

6. Batteriesystem nach Anspruch 5,
**dadurch gekennzeichnet, dass** die zweite Hülse (8.2) mit dem zweiten Stift (5.2) verschweißt ist.

7. Batteriesystem nach zumindest einem der vorgehenden Ansprüche,
**dadurch gekennzeichnet, dass** das zweite Kontaktelement (6.2) mit dem zweite Ende des flexiblen Abschnitts (7) durch eine Crimp-Verbindung verbunden ist.

8. Batteriesystem nach zumindest einem der Ansprüche 2, 3, 5, 6,
**dadurch gekennzeichnet, dass** die erste und/oder zweite Hülse (8.1/8.2) zumindest abschnittsweise eine konische Form aufweist.

9. Verfahren zur Herstellung einer elektrisch leitenden Verbindung zwischen einem ersten Stift (5.1), der an einem Zellverbinder (2) angeordnet ist, welcher mit Polen (1.1P, 1.2P) von zumindest zwei Zellen (1, 1.1, 1.2) eines Batteriesystems verbunden ist, und einem zweiten Stift (5.2), der an einer Elektronikeinheit (4) angeordnet ist, durch einen Leiter (3), der einen flexiblen Abschnitt (7) sowie ein erstes und ein zweites Kontaktelement (6.1, 6.2) umfasst, umfassend die Schritte:
- Aufschieben einer ersten Hülse (8.1) des ersten Kontaktelements (6.1) auf den ersten Stift (5.1),
- Verschweißen der ersten Hülse (8.1) mit dem ersten Stift (5.1),
- Aufschieben einer zweiten Hülse (8.2) des zweiten Kontaktelements (6.2) auf den zweiten Stift (5.2),
- Verschweißen der zweiten Hülse (8.2) mit dem zweiten Stift (5.2).

10. Verfahren zur Herstellung einer elektrisch leitenden Verbindung nach Anspruch 9, umfassend den Schritt:
- Verlegen des Leiters (3) vom ersten Stift (5.1) zum zweiten Stift (5.2), oder Verlegen des Leiters (3) vom zweiten Stift (5.2) zum ersten Stift (5.1).

11. Verfahren zur Herstellung einer elektrisch leitenden Verbindung nach Anspruch 9 oder Anspruch 10, umfassend den Schritt:
Herstellen einer Crimp-Verbindung zwischen dem ersten Kontaktelement (6.1) und einem ersten Ende des flexiblen Abschnitts (7).

12. Verfahren zur Herstellung einer elektrisch leitenden Verbindung nach zumindest einem der Ansprüche 9 bis 11, umfassend den Schritt:
- Herstellen einer Crimp-Verbindung zwischen dem zweiten Kontaktelement (6.2) und einem zweiten Ende des flexiblen Abschnitts (7).

13. Verfahren zur Herstellung einer elektrisch leitenden Verbindung nach zumindest einem der Ansprüche 9 bis 12, umfassend den Schritt:
- Ablängen des flexiblen Abschnitts (7).

## Claims

1. Battery system, comprising a plurality of cells (1) which are arranged in at least one stack, a pole (1.1P) of a first cell (1.1) being connected in an electrically conductive manner to a pole (1.2P) of a second cell (1.2) by a cell connector (2), an electronics unit (4) adapted to detect the voltage of the cells (1), a first pin (5.1) being arranged at the cell connector (2) and at least one second pin (5.2) being arranged at the electronics unit (4), and a conductor (3), an electroconductive connection being formed between the first pin (5.1) and the second pin (5.2) by the conductor (3), and the conductor (3) comprising at least one flexible section (7),
**characterized in that** the conductor (3) comprises a first contact element (6.1) which is connected in an electrically conductive manner to a first end of the flexible section (7), wherein the first contact element (6.1) is connected in an electrically conductive manner with the first pin (5.1), and **in that** the conductor (7) comprises a second contact element (6.2) which is connected in an electrically conductive manner to a second end of the flexible section (7), wherein the second contact element (6.2) is connected in an electrically conductive manner to the second pin (5.2).

2. Battery system according to claim 1,
**characterized in that** the first contact element (6.1) comprises a first sleeve (8.1) adapted to encompass at least one section of the first pin (5.1).

3. Battery system according to claim 2,
**characterized in that** the first sleeve (8.1) is welded to the first pin (5.1).

4. Battery system according to at least one of claims 1 to 3,
**characterized in that** the first contact element (6.1) is connected to a first end of the flexible section (7) by a crimp connection.

5. Battery system according to at least one of the preceding claims,
**characterized in that** the second contact element (6.2) comprises a second sleeve (8.2) adapted to encompass at least one section of the second pin (5.2).

6. Battery system according to claim 5,
**characterized in that** the second sleeve (8.2) is welded to the second pin (5.2).

7. Battery system according to at least one of the preceding claims,
**characterized in that** the second contact element (6.2) is connected to the second end of the flexible section (7) by a crimp connection.

8. Battery system according to at least one of claims 2, 3, 5, 6,
**characterized in that** the first and/or second sleeve (8.1/8.2) comprises a conical shape at least in sections.

9. Method for producing an electroconductive connection between a first pin (5.1) arranged at a cell connector (2) which is connected to poles (1.1P, 1.2P) of at least two cells (1, 1.1, 1.2) of a battery system, and a second pin (5.2) arranged at an electronics unit (4), by a conductor (3) which comprises a flexible section (7) as well as first and second contact elements (6.1, 6.2), comprising the following steps:
- inserting a first sleeve (8.1) of the first contact element (6.1) onto the first pin (5.1),
- welding the first sleeve (8.1) to the first pin (5.1),
- inserting a second sleeve (8.2) of the second contact element (6.2) onto the second pin (5.2),
- welding the second sleeve (8.2) to the second pin (5.2).

10. Method for producing an electroconductive connection according to claim 9, comprising the following step:
- routing the conductor (3) from the first pin (5.1) to the second pin (5.2), or routing the conductor (3) from the second pin (5.2) to the first pin (5.1).

11. Method for producing an electroconductive connection according to claim 9 or claim 10, comprising the following step:
producing a crimp connection between the first contact element (6.1) and a first end of the flexible section (7).

12. Method for producing an electroconductive connection according to at least one of claims 9 to 11, comprising the following step:
- producing a crimp connection between the second contact element (6.2) and a second end of the flexible section (7).

13. Method for producing an electroconductive connection according to at least one of claims 9 to 12, comprising the following step:
- cutting the flexible section (7) to length.

## Revendications

1. Système de batterie, comprenant une pluralité d'éléments (1) qui sont disposés dans au moins un empilement, un pôle (1.1P) d'un premier élément (1.1) étant relié de manière électroconductrice à un pôle (1.2P) d'un deuxième élément (1.2) par un connecteur d'éléments (2), une unité électronique (4), qui est conçue pour détecter la tension des éléments (1), une première broche (5.1) étant disposée sur le connecteur d'éléments (2) et au moins une deuxième broche (5.2) étant disposée sur l'unité électronique (4), et un conducteur (3), une liaison électroconductrice étant formée par le conducteur (3) entre la première broche (5.1) et la deuxième broche (5.2), et le conducteur (3) comprenant au moins une partie flexible (7),
**caractérisé en ce que** le conducteur (3) comprend un premier élément de contact (6.1), qui est relié de manière électroconductrice à une première extrémité de la partie flexible (7), le premier élément de contact (6.1) étant relié de manière électroconductrice à la première broche (5.1), et **en ce que** le conducteur (7) comprend un deuxième élément de contact (6.2), qui est relié de manière électroconductrice à une deuxième extrémité de la partie flexible (7), le deuxième élément de contact (6.2) étant relié de manière électroconductrice à la deuxième broche (5.2).

2. Système de batterie selon la revendication 1,
**caractérisé en ce que** le premier élément de contact (6.1) comprend un premier manchon (8.1), qui est conçu pour envelopper au moins une partie de la première broche (5.1).

3. Système de batterie selon la revendication 2,
**caractérisé en ce que** le premier manchon (8.1) est soudé à la première broche (5.1).

4. Système de batterie selon au moins l'une des revendications 1 à 3,
**caractérisé en ce que** le premier élément de contact (6.1) est relié à la première extrémité de la partie flexible (7) par une liaison sertie.

5. Système de batterie selon au moins l'une des revendications précédentes, **caractérisé en ce que** le deuxième élément de contact (6.2) comprend un deuxième manchon (8.2), qui est conçu pour envelopper au moins une partie de la deuxième broche (5.2).

6. Système de batterie selon la revendication 5, **caractérisé en ce que** le deuxième manchon (8.2) est soudé à la deuxième broche (5.2).

7. Système de batterie selon au moins l'une des revendications précédentes, **caractérisé en ce que** le deuxième élément de contact (6.2) est relié à la deuxième extrémité de la partie flexible (7) par une liaison sertie.

8. Système de batterie selon au moins l'une des revendications 2, 3, 5, 6, **caractérisé en ce que** le premier et/ou le deuxième manchon (8.1/8.2) présente une forme conique au moins sur certaines parties.

9. Procédé d'établissement d'une liaison électroconductrice entre une première broche (5.1), qui est disposée sur un connecteur d'éléments (2), lequel est relié aux pôles (1.1P, 1.2P) d'au moins deux éléments (1, 1.1, 1.2) d'un système de batterie, et une deuxième broche (5.2), qui est disposée sur une unité électronique (4), au moyen d'un conducteur (3), qui comprend une première partie flexible (7) ainsi qu'un premier et un deuxième élément de contact (6.1, 6.2), comprenant les étapes consistant à :
- enfoncer un premier manchon (8.1) du premier élément de contact (6.1) sur la première broche (5.1),
- souder le premier manchon (8.1) à la première broche (5.1),
- enfoncer un deuxième manchon (8.2) du deuxième élément de contact (6.2) sur la deuxième broche (5.2),
- souder le deuxième manchon (8.2) à la première broche (5.2).

10. Procédé d'établissement d'une liaison électroconductrice selon la revendication 9, comprenant l'étape consistant à :
- déplacer le conducteur (3) de la première broche (5.1) à la deuxième broche (5.2), ou déplacer le conducteur (3) de la deuxième broche (5.2) à la première broche (5.1).

11. Procédé d'établissement d'une liaison électroconductrice selon la revendication 9 ou selon la revendication 10, comprenant l'étape consistant à :
établir une liaison sertie entre le premier élément de contact (6.1) et une première extrémité de la partie flexible (7).

12. Procédé d'établissement d'une liaison électroconductrice selon au moins l'une des revendications 9 à 11, comprenant l'étape consistant à :
- établir une liaison sertie entre le deuxième élément de contact (6.2) et une deuxième extrémité de la partie flexible (7).

13. Procédé d'établissement d'une liaison électroconductrice selon au moins l'une des revendications 9 à 12, comprenant l'étape consistant à :
- mettre la partie flexible (7) à la longueur.
